# EUROPÄISCHE PATENTANMELDUNG

(11) **EP 0 984 604 A2**
(43) Veröffentlichungstag der Anmeldung: **08.03.2000**
(21) Anmeldenummer: 99115220.8
(22) Anmeldetag: 02.08.1999
(51) Int. Cl.: H04M 1/00, H04M 3/50

(54) **Tragbare elektronische Vorrichtung mit einer Schnittstelle zur Ankopplung an einem Fernmeldenetz für den Empfang von Informationen von einer Datenbank**

(30) Priorität: 02.09.1998 DE 19839869
(71) Anmelder: Deutsche Telekom AG, 53113 Bonn (DE)
(72) Erfinder: Hertzel, Silvio, 53639 Königswinter (DE); Wagner, Robert, 53343 Wachtberg (DE); Perini, Roland, 53424 Remagen (DE)

(57) **Zusammenfassung**

Die Erfindung betrifft eine mobile Vorrichtung zum Empfang von über ein Festnetz übertragenen Informationen, wobei das Festnetz wenigstens eine Informations-gebende Einrichtung enthält.

Bisher ist es nicht möglich, die in einem Festnetz für einen bestimmten Kunden bereitgestellten Informationen diesem an einen beliebigen Teilnehmeranschluß automatisch zu übermitteln und wiederzugeben.

Dazu wird eine mobile Vorrichtung (10) geschaffen, die wenigstens eine Schnittstelle zum teilnehmerseitigen Verbinden mit einer Teilnehmer-Anschlußeinrichtung (22), eine Einrichtung zum Empfangen (60) einer von der Informations-gebenden Einrichtung (30) bereitgestellten Information, einen ersten Speicher (70) zum Speichern der empfangenen Information, eine Einrichtung zur Wiedergabe (80) der Information, und eine Einrichtung zum Identifizieren der Vorrichtung gegenüber dem Festnetz (20) aufweist.

## Beschreibung

Die Erfindung betrifft eine mobile Vorrichtung zum Empfang von über ein Festnetz übertragenen Informationen, wobei das Festnetz wenigstens eine Informations-gebende Einrichtung enthält.

Aufgrund der sich rasch entwickelnden Kommunikationstechnik und des Einzugs von multimedialen Anwendungen ist es für Unternehmen als auch für Privatkunden wichtig, möglichst rasch und unabhängig vom Teilnehmeranschluß über aktuelle Nachrichten, die für sie bestimmt sind, zu verfügen. So hat beispielsweise die Deutsche Telekom AG in ihrem Festnetz einen Netz-Anrufbeantworter, die sogenannte T-Net-Box, implementiert, um Anrufe für einen bestimmten Kunden, der im Augenblick an seinem Teilnehmeranschluß nicht erreichbar ist, zwischenzuspeichern. Darüber hinaus können dem Kunden über einen Funkrufempfänger das Vorliegen einer Nachricht in der T-Net-Box angezeigt werden, wobei die gespeicherte Nachricht von jedem beliebigen Anschluß aus abgefragt werden kann. Ein automatisches Übermitteln der Nachricht zum Kunden ist allerdings bis heute nicht möglich. Neben solchen einfachen, Informations-gebenden Netzeinrichtungen wird es in Zukunft zentrale Informationen speichernde Datenbanken geben, die mit einem sogenannten Ereignisserver kommunizieren können, um auf einfache Weise dem Kunden die unterschiedlichsten Informationen zukommen lassen zu können. In diesem Zusammenhang wird es wichtig sein, daß ein Kunde von einem beliebigen Teilnehmeranschluß aus die für ihn bestimmten Informationen erhalten kann, auch wenn keine Endeinrichtung vorhanden oder aktiviert ist.

Der Erfindung liegt daher die Aufgabe zugrunde, eine mobile Vorrichtung zu schaffen, mit der es möglich ist, die in einem Festnetz für einen bestimmten Kunden bereitgestellten Informationen diesem an einen beliebigen Teilnehmeranschluß zu übermitteln.

Der Kerngedanke der Erfindung ist darin zu sehen, bestehende Teilnehmeranschlußdosen durch eine mobile intelligente Vorrichtung derart zu verbessern, daß die für einen bestimmten Kunden von einer Informations-gebenden Einrichtung innerhalb des Festnetzes bereitgehaltenen Informationen an jedem Teilnehmeranschluß empfangen und wiedergeben werden können, ohne daß eine Endeinrichtung aktiviert oder vorhanden sein muß.

Das obengenannte technische Problem löst die Erfindung mit den Merkmalen des Anspruchs 1.

Dazu wiest die mobile Vorrichtung wenigstens eine Schnittstelle zum teilnehmerseitigen Verbinden mit einer Teilnehmer-Anschlußeinrichtung, eine Einrichtung zum Empfangen einer von der Informations-gebenden Einrichtung bereitgestellten Information, einen ersten Speicher zum Speichern der empfangenen Information sowie eine Einrichtung zur Wiedergabe der Information auf. Damit die von einer Informations-gebenden Einrichtung bereitgestellten Informationen nur von der berechtigten Vorrichtung empfangen werden kann, ist eine Einrichtung zum Identifizieren der Vorrichtung gegenüber dem Festnetz vorgesehen. Unter dem Ausdruck "Identifizieren" wird in der Beschreibung und den Ansprüchen das Anmelden der mobilen Vorrichtung am Festnetz verstanden.

Um sicher zu stellen, daß die mobile Vorrichtung zum Empfang von Informationen von einer bestimmten Informations-gebenden Einrichtung berechtigt ist, kann die mobile Vorrichtung zusätzlich eine Authentifizierungsprozedur mit dem Netz, insbesondere mit der Informations-gebenden Einrichtung durch führen.

Die Entscheidung, ob die übermittelte Information für die an einem bestimmten Teilnehmeranschluß angeschaltete mobile Vorrichtung bestimmt ist, kann aufgrund der vorher durchgeführten Identifikation in einer Vermittlungsstelle erfolgen. Alternativ kann diese Entscheidung aber auch in der mobilen Vorrichtung selbst getroffen werden. Dazu ist eine Einrichtung zum Erkennen der die Information übertragenden Informations-gebenden Netzeinrichtung vorgesehen. Beispielsweise ist vorgesehen, daß die Empfangseinrichtung erst dann aktiviert wird, wenn die Informations-gebende Netzeinrichtung erkannt worden ist.

Je nach Ausführungsform kann die Empfangseinrichtung entsprechende Einrichtungen zum Decodieren und/oder Demodulieren der empfangenen Information enthalten. Vorzugsweise ist die Empfangseinrichtung auch zum Entschlüsseln kryptographisch verschlüsselter Informationen ausgebildet.

Zur Wiedergabe der empfangenen Information ist ein Display und/oder ein Lautsprecher vorgesehen. Auf diese Weise ist sichergestellt, daß eine Information von einer vorbestimmten Netzeinrichtung zu jeder Zeit entgegengenommen und ausgegeben werden kann, auch wenn keine Endeinrichtung aktiviert oder an einen Teilnehmeranschluß angeschaltet ist.

Weitere vorteilhafte Ausgestaltungen sind in den Unteransprüchen angegeben.

Die mobile Vorrichtung ist ferner mit einem Sender ausgebildet, um entweder vorbestimmte in einem Speicher abgelegte Nachrichten oder mittels einer alphanumerischen Tastatur frei eingebbare Informationen zu einer bestimmten Zieleinrichtung über das Festnetz übertragen zu können.

Darüber hinaus ist wenigstens eine Anschlußbuchse zum Anschalten einer Endeinrichtung vorgesehen, zu der die empfangene Information weitergeleitet werden kann. Diese Zusatzleistung ist besonders sinnvoll, wenn es sich bei der Information um Nachrichten handelt, die über ein Faxgerät oder einen Drucker ausgegeben werden sollen.
Um die empfangene Information einer vorbestimmten Endeinrichtung zuführen zu können, weist die mobile Vorrichtung eine erste Detektiereinrichtung zum Erfassen einer mit der Information übertragenen Kennung auf, die zum Beispiel den Informationstyp (z. B. Wetterdaten, Aktienkurse u.s.w.) und/oder das Medium der Information (e-mail, Fax- oder Sprachinformation) darstellt. Eine zweite Detektiereinrichtung dient dem Erfassen des Zustandes jeder Anschlußbuchse (Anschlußbuchse ist beschaltet oder nicht) und/oder dem Erfassen des Typs der an die jeweilige Anschlußbuchse angeschalteten Endeinrichtung. In einem zweiten Speicher sind wenigstens eine vorbestimmte Kennung und der dieser Kennung zugeordnete Endeinrichtungstyp gespeichert. Eine programmierbare Steuereinrichtung liest unter Ansprechen auf die erste Detektiereinrichtung den unter der empfangenen Kennung gespeicherten Endeinrichtungstyp aus und leitet unter Ansprechen auf die zweite Detektiereinrichtung die Information über ein Koppelnetz an die der jeweiligen Kennung zugeordneten Endeinrichtung und/oder den ersten Speicher weiter.

Um einem Teilnehmer auf einfache und schnelle Weise den Eingang einer neuen Information anzeigen zu können, ist eine optische Einrichtung, beispielsweise in Form einer LED, eine akkustische Einrichtung, beispielsweise in Form eines Lautsprechers und/oder eine mechanische Einrichtung in Form eines Vibrators vorgesehen.

Zum Programmieren der Steuereinrichtung kann ein Personal Computer über eine Schnittstelle an die mobile Vorrichtung angeschaltet werden.

Um die Flexibilität und Leistungsfähigkeit der mobilen Vorrichtung zu steigern, kann diese automatisch eine vorbestimmte Informations-gebende Einrichtung anwählen und von dort eine vorbestimmte Information abfragen. Dies geschieht dadurch, daß die programmierbare Steuereinrichtung unter Ansprechen auf ein vorbestimmtes Ereignis einen Verbindungsaufbau zu einer vorbestimmten Informations-gebenden Netzeinrichtung einleitet und die bereitgestellte Information abfragt. Die Adresse jeder Informations-gebenden Netzeinrichtung kann in einem dritten Speicher abgelegt.

Wenn die mobile Vorrichtung an ein digitales Festnetz angeschaltet ist, können zur Einsparung der Kanalkapazität Kurzinformationen von der Informations-gebenden Einrichtung zur Anschlußvorrichtung und in umgekehrter Richtung über den Steuerkanal des Festnetzes übermittelt werden, über den auch die Steuerdaten zur Einleitung eines Verbindungsaufbaus übertragen werden.

Um eine schnurlose Verbindung der mobilen Vorrichtung mit einem Teilnehmeranschluß zu ermöglichen, ist die Schnittstelle als Funk-, Infrarot- oder Ultraschallschnittstelle verwirklicht.

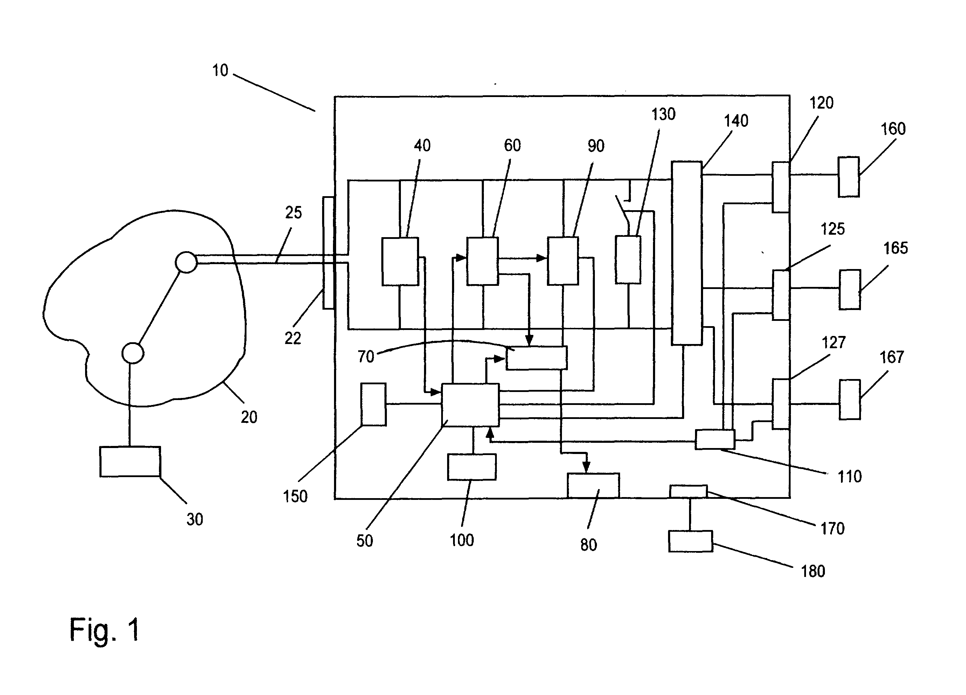

Die Erfindung wird nachfolgend anhand eines Ausführungsbeispiels in Verbindung mit der beiliegenden Zeichnung näher erläutert.

Die Figur zeigt beispielsweise ein analoges Festnetz 20 und eine nachfolgend als Informationssauger bezeichnete analoge mobile Vorrichtung 10, die beispielsweise zum Aufstecken auf eine eine analoge Anschlußleitung 25 abschließende Teilnehmeranschlußdose 22 ausgebildet ist. Der einfachen Darstellung enthält das Festnetz 20 lediglich eine Informations-gebende Einrichtung 30. Bei der Informations-gebenden Einrichtung 30 handelt es sich beispielsweise um eine Datenbank, in der die aktuellen Wetterdaten für Deutschland hinterlegt sind. Zwar wird nachfolgend die Erfindung anhand des analogen Festnetzes 20 und einer Wetterdaten speichernden Datenbank 30 beschrieben, doch ist offensichtlich, daß die Erfindung auch in einem digitalen Festnetz mit anderen Informations-gebenden Einrichtungen zum Einsatz kommen kann. Wie in der Figur dargestellt, schließt die TAE-Dose 22 die a- und b-Ader der Anschlußleitung 25 ab. Der auf die TAE-Dose 22 aufgestekte Informationssauger 10 weist eine nicht dargestellte Identifikationseinrichtung auf, die vorteilhafterweise den Informationssauger 10 automatisch nach dem korrekten Aufstecken auf die TAE-Dose 22 im Festnetz 20 - beispielsweise bei der dem Teilnehmeranschluß zugeordneten Vermittlungsstelle, einem intelligenten Netz oder der Informations-gebenden Datenbank 30 - anmeldet.
Da der Informationssauger 10 zur Identifizierung mit dem Netz 20 kommunizieren muß, kann er auch einfach zum Absetzen von Nachrichten weitergebildet werden. Hierzu sind ein nicht dargestellter Sender und ein Speicher vorgesehen, in dem vorbetimmte Nachrichten abgelegt sind. Beliebige Nachrichten können beispielsweise über eine Tastatur eingegeben und über den Sender zum Festnetz 20 übertragen werden. Ferner ist eine Datenbank-Erkennungseinrichtung 40 implementiert, die derart ausgebildet ist, daß sie die rufende Datenbank 30 erkennen kann, in dem sie beispielsweise die von der Datenbank übertragene Rufnummer oder Adresse auswertet. Die Datenbank-Erkennungseinrichtung 40 ist mit einer programmierbaren Steuereinrichtung 50 verbunden. An dieser Stelle sei kurz erwähnt, daß die Steuereinrichtung 50 auch zur Durchführung von Quittungsprozeduren mit dem Festnetz 20 und der Datenbank 30 ausgebildet sein kann. Die programmierbare Steuereinrichtung 50 ist wiederum mit einer Empfangseinrichtung 60 verbunden, die die von der Datenbank 30 kommenden Wetterdaten empfangen und zu einem Informations-Speicher 70 weiterleiten kann. Ferner ist ein Display 80 vorgesehen, das sowohl mit der programmierbaren Steuereinrichtung 50 als auch mit dem Informations-Speicher 70 verbunden ist. Der Empfangseinrichtung 60 ist eine Detektiereinrichtung 90 zugeordnet, die eine mit der Information übertragene Kennung, die den Informationstyp und/oder das Medium der Information darstellt, auswerten kann. Unter Informationstyp seien im vorliegenden Beispiel die Wetterdaten der Datenbank 30 zu verstehen. Andere Beispiele sind Börsendaten, in einem Netzanrufbeantworter abgelegte Nachrichten und der gleichen. Unter dem Ausdruck "Medium der Information" ist die Art der jeweiligen Information, beispielsweise eine e-mail, Fax- oder Sprachinformation zu verstehen. Die Detektiereinrichtung 90 ist ebenfalls mit der programmierbaren Steuereinrichtung 50 verbunden. Ferner ist eine weitere Detektiereinrichtung 110 vorgesehen, die mit zwei Anschlußbuchsen 120 und 125 verbunden ist, an die ein Telefon 160 bzw. ein Telefaxgerät 165 angeschaltet ist. Die Detektiereinrichtung 110 hat die Aufgabe, zu erkennen, ob an der Anschlußbuchse 120 und 125 eine Endeinrichtung angeschaltet ist und um welche Endeinrichtung es sich handelt. Im vorliegenden Fall stellt die Detektiereinrichtung 110 fest, daß sowohl die Anschlußbuchse 120 als auch die Anschlußbuchsee 125 belegt sind und daß an die Anschlußbuchse 120 das Telefon 160 und an die Anschlußbuchse 125 das Telefaxgerät 165 angeschaltet sind. Demzufolge müssen sowohl das Telefon 160 als auch das Telefaxgerät 165 in der Lage sein, eine entsprechende Kennung an die Detektiereinrichtung 110 zu übertragen. Dies erfolgt automatisch oder unter Aufforderung der Detektiereinrichtung 110. Die Anschlußbuchsen 120 und 125 sind mit einem Koppelfeld 140 verbunden, über das unter Steuerung der programmierbaren Steuereinrichtung 50 Informationen entweder zur Anschlußbuchse 120 und/oder zur Anschlußbuchse 125 vermittelt werden. Der Informationssauger 10 verfügt ferner über eine Schnittstelle, wie z. B. eine RS232-Schnittstelle, an die ein Personalcomputer 180 angeschaltet ist. Ferner ist ein DTMF-Generator 130 mit der programmierbaren Steuereinrichtung 50 verbunden, der beispielsweise die für die Einleitung eines Verbindungsaufbaus zur Datenbank 30 notwendigen Steuersignale in Mehrfrequenztöne umsetzt. Auch Informationen, die vom Personalcomputer 180 über die Anschlußleitung 25 übermittelt werden sollen, werden von dem DTMF-Generator 130 umgesetzt. In einem Speicher 100 ist eine Tabelle abgelegt, die vorbestimmte Kennungen, die den Informationstyp oder das Medium der Information darstellten, und den dazugehörenden Endeinrichtungstyp enthält. Mit Hilfe dieser Tabelle ist die programmierbare Steuereinrichtung 50 in der Lage, in Verbindung mit der Detektiereinrichtung 90 die Endeinrichtung zu ermitteln, zu der eine vorbestimmte Information weiter geleitet werden soll. Damit die Anschlußvorrichtung 10 einen Verbindungsaufbau beispielsweise zur Datenbank 30 einleiten kann, ist ein Adressen Speicher 150 vorgesehen, in dem die Adresse, das ist beispielsweise die Rufnummer, unter der die Datenbank 30 anwählbar ist, abgelegt ist. Es versteht sich von selbst, daß in dem Adressen-Speicher 150 die Adressen von verschiedenen Informations-gebenden Einrichtungen gespeichert sein können. Die Energieversorgung des Informationssaugers erfolgt beispielsweise über die Netzspannung, das Festnetz oder eine andere Energiequelle (z. B. Solarzellen).

Die Funktionsweise des Informationssaugers 10 wird nunmehr anhand eines Ausführungsbeispiels näher erläutert.

Es sei angenommen, daß ein Kunde den Informationssauger 10 korrekt in die TAE-Dose 22 eingesteckt hat. Diesen Zustand erfasst die programmierbare Steuereinrichtung 50, die anschließend automatisch die Identifizierung des Informationssaugers 10 gegenüber dem Festnetz 20 und/oder der Datenbank 30 durchführt. Aufgrund der Identifizierung weiß das Festnetz 20, daß der Informationssauger 10 zum Empfang von Informationen von der Datenbank 30 berechtigt ist. Ferner kennt das Festnetz 20 die Adresse des Teilnehmeranschlusses, an dem der Informationsauger 10 im Augenblick angeschaltet ist. Diese Parameter können in einer zentralen dem Festnetz 20 zugeordneten Einrichtung gespeichert werden. Außerdem kann eine Authentifizierung zwischen denm Informationssauger 10 und der Datenbank 30 durchgeführt werden, um die Echtheit beider Teilnehmer zu prüfen. Weiter sei angenommen, daß der Kunde regelmäßig über die sich ändernde Wetterlage in Bonn unterrichten lassen möchte. Nachdem die Wetterdaten aktualisiert worden sind, leitet die Datenbank 30 einen Verbindungsaufbau zu dem mit der TAE-Dose 22 abgeschlossenen Teilnehmerasnschluß ein. Die diesem Teilnehmeranschluß zugeordnete Vermittlungsstelle signalisiert dem Informationssauger 10 mittles eines MFV-Signals, daß die Datenbank 30 aktuelle Daten vorliegen hat. Die Erkennungseinrichtung 40 stellt fest, daß die Datenbank 30 Wetterdaten zum Informationssauger 10 übertragen möchte und teilt dies der programmierbaren Steuereinrichtung 50 mit, die daraufhin die Empfangseinrichtung 60 aktiviert. Vorzugsweise übermittelt die programmierbare Steuereinrichtung 50 über den DTMF-Generator 130 ein Empfangsbereitschaftssignal zur Datenbank 30. Die Datenbank 30 übermittelt anschließend die aktuellen Wetterdaten zusammen mit einer Kennung, die von der Detektiereinrichtung 90 dahingehend interpretiert wird, daß es sich bei den ankommenden Daten um Wetterdaten handelt, die über ein Telefaxgerät ausgegeben werden sollen. Über die Empfangseinrichtung 60 gelangen die Wetterdaten zunächst in den Informations-Speicher 70 und von dort zum Display 80. Eine nicht dargestellte optische und/oder akkustische Einrichtung soll dem Kunden signalisieren, daß aktuelle Wetterdaten im Speicher 70 eingegangen sind. Diese Meldung kann neben den Wetterdaten auf dem Display 80 dargestellt werden. Die Detektiereinrichtung 90 teilt nunmehr der programmierbaren Steuereinrichtung 50 mit, daß die empfangenen Daten vom Informationstyp "Wetterdaten" sind. Daraufhin greift die programmierbare Steuereinrichtung 50 auf den Speicher 150 zu, um zu erkennen, an welche Endeinrichtung Wetterdaten weiterzuleiten sind. Aufgrund der im Speicher 150 abgelegten Tabelle stellt die programmierbare Steuereinrichtung 50 fest, daß Wetterdaten an ein Telefaxgerät weiterzuleiten sind. Über die Detektoreinrichtung 110 wird der programmierbaren Steuereinrichtung 50 außerdem mitgeteilt, daß das Telefaxgerät 165 an der Anschlußbuchse 125 angeschaltet ist. Daraufhin werden die von der Datenbank 30 übertragenen Wetterdaten über die Empfangseinrichtung 60 und das Koppelfeld 140 zur Anschlußbuchse 125 und damit zum Telefaxgerät 165 übertragen und dort ausgegeben. Alternativ ist es denkbar, die im Speicher 70 abgelegten Daten zwischenzuspeichern und danach über das Koppelfeld zum Telefaxgerät 165 und zum Display 80 weiterzuleiten.

Es sei nun ein weiteres Szenario angenommen, bei dem der Informationssauger 10 einen Verbindungsaufbau zur Datenbank 30 unter Ansprechen auf ein vorbestimmtes Ereignis einleitet. Bei diesem Ereignis kann es sich beispielsweise um eine bestimmte Uhrzeit und/oder ein bestimmtes Datum handeln, die an einem programmierbaren Zeitgeber einstellbar sind. In unserem Beispiel sei angenommen, daß der Kunde von seinem Personalcomputer 180 aus dem Informationssauger 10 signalisiert, Wetterdaten für Bonn einzuholen. Unter Ansprechen auf diese Aufforderung liest die programmierbare Steuereinrichtung 50 die zur Datenbank 30 gehörende Rufnummer oder Adresse aus dem Speicher 150 aus und legt diese an den DTMF-Generator 130 an. Der DTMF-Generator 130 setzt die Adresse in entsprechende Mehrfrequenztöne um und gibt diese an die dazugehörige Vermittlungsstelle ab, die daraufhin eine Verbindung zur Datenbank 30 herstellt. Anschließend führt die programmierbare Steuereinrichtung 50 eine Authentisierungsprozedur mit der Vermittlungsstelle oder mit der Datenbank 30 durch, um einen berechtigten Zugang zur Datenbank 30 zu erhalten. Danach überträgt die Steuereinrichtung 50 ein Empfangsbereitschaftsignal zur Datenbank 30, die daraufhin die abgefragten Wetterdaten in verschlüsselter Form übermittelt. Der Empfänger 60 ist in der Lage, die von der Datenbank 30 übertragenen Wetterdaten, die zur Datensicherung verschlüsselt übertragen werden, wieder zu entschlüsseln.

Wie bereits einleitend erwähnt, kann der Informationssauger 10 auch in einem digitalen Netz verwendet werden. Die hierzu erforderlichen Änderungen liegen im Bereich des durchschnittlichen Fachwissens eines auf diesem Gebiet tätigen Fachmanns. So wird beispielsweise als Einrichtung zum Erkennen der rufenden Informations-gebenden Netzeinrichtung 30 eine Einrichtung zur Auswertung der über dem Steuerkanal übertragenen Signalisierung- und Informationssignale verwendet. Diese Auswerte- und Empfangseinrichtung ist dabei derart ausgebildet, daß die über den Steuerkanal übermittelten Steuerdaten an die programmierbare Steuereinrichtung 50 und die über den Steuerkanal übertragenen Informationen dem Speicher 70 zugeführt werden.

Dank der Erfindung ist es möglich, beliebige von einer oder mehreren Informations-gebenden Netzeinrichtungen bereitgestellte Informationen an einem beliebigen Teilnehmeranschluß zu empfangen und wiederzugeben, ohne daß eine Endeinrichtung an der Anschlußvorrichtung angeschaltet oder aktiviert sein muß.

### Bezugszeichenliste

- 10: Informationssauger
- 20: analoges Festnetz
- 22: TAE-Dose
- 25: Anschlußleitung
- 30: Datenbank mit Wetterdaten
- 40: Datenbank-Erkennungseinrichtung
- 50: programmierte Steuereinrichtung
- 60: Empfangseinrichtung
- 70: Informations-Speicher
- 80: Display
- 90: Detektiereinrichtung
- 100: Speicher
- 110: Detektiereinrichtung
- 120: Anschlußbuchse
- 125: Anschlußbuchse
- 130: DTMF-Generator
- 140: Koppelfeld
- 150: Adressenspeicher
- 160: Telefon
- 165: Telefaxgerät
- 170: Schnittstelle
- 180: Personal Computer

## Patentansprüche

1. Mobile Vorrichtung zum Empfangen von über ein Festnetz (20) übertragenen Informationen, wobei das Festnetz (20) wenigstens eine Informations-gebende Netzeinrichtung (30) enthält, mit folgenden Merkmalen:
- wenigstens eine Schnittstelle zum teilnehmerseitigen Verbinden mit einer Teilnehmer-Anschlußeinrichtung (22),
- eine Einrichtung zum Empfangen (60) einer von der Informations-gebenden Einrichtung (30) bereitgestellten Information,
- ein erster Speicher (70) zum Speichern der empfangenen Information,
- eine Einrichtung zur Wiedergabe (80) der Information, und
- eine Einrichtung zum Identifizieren der Vorrichtung gegenüber dem Festnetz (20).

2. Mobile Vorrichtung nach Anspruch 1, gekennzeichnet durch eine Einrichtung zum Erkennen (40) der rufenden Informations-gebenden Netzeinrichtung (30).

3. Mobile Vorrichtung nach Anspruch 1 oder 2, gekennzeichnet durch eine Sendeeinrichtung zum Übertragen von vorbestimmten oder frei eingebbaren Nachrichten.

4. Mobile Vorrichtung nach Anspruch 3, gekennzeichnet durch einen zweiten Speicher zum Ablegen der zu übertragenden Nachrichten.

5. Mobile Vorrichtung nach einem der Ansprüche 1 bis 4, gekennzeichnet durch wenigstens eine Anschlußbuchse (120, 125) zum Anschalten einer Endeinrichtung (160, 165).

6. Mobile Vorrichtung nach einem der Ansprüche 1 bis 5, dadurch gekennzeichnet, daß die Schnittstelle eine Funk-, Infrarot- oder Ultraschall-Verbindung mit der Teilnehmeranschlußeinrichtung (22) unterstützt.

7. Mobile Vorrichtung nach einem der Ansprüche 1 bis 6, dadurch gekennzeichnet, daß die Wiedergabeeinrichtung (80 ein Display und/oder ein Lautsprecher ist.

8. Mobile Vorrichtung nach einem der Ansprüche 4 bis 7, gekennzeichnet durch
eine erste Detektiereinrichtung (90) zum Erfassen einer mit der Information übertragenen Kennung, die den Informationstyp und/oder das Medium der Information darstellt,
eine zweite Detektiereinrichtung (110) zum Erfassen des Zustandes jeder Anschlußbuchse (120, 125) und/oder zum Erfassen des Typs der an die jeweilige Anschlußbuchse angeschalteten Endeinrichtung (160, 165),
einen dritten Speicher (100), in dem wenigstens eine vorbestimmte Kennung und der dieser Kennung zugeordnete Endenrichtungstyp gespeichert sind,
wobei eine programmierbare Steuereinrichtung (50) unter Ansprechen auf die erste und zweite Detektiereinrichtung (90, 110) die Information über ein Koppelnetz (140) an die entsprechende Endeinrichtung (160, 165) und/oder den ersten Speicher (70) weiterleitet.

9. Mobile Vorrichtung nach einem der Ansprüche 1 bis 8, gekennzeichnet durch eine optische, akustische und/oder mechanische Einrichtung zur Signalisierung einer im Speicher (70) neu gespeicherten Information.

10. Mobile Vorrichtung nach einem der Ansprüche 1 bis 9,
gekennzeichnet durch eine Schnittstelle (127) zum Anschalten eines Personal Computers (167).

11. Mobile Vorrichtung nach einem der Ansprüche 1 bis 10, dadurch gekennzeichnet, daß
die programmierbare Steuereinrichtung (50) unter Ansprechen auf ein vorbestimmtes Ereignis einen Verbindungsaufbau zu einer vorbestimmten Informations-gebenden Einrichtung (30) einleitet und die bereitgestellte Information abfragt.

12. Mobile Vorrichtung nach Anspruch 11, gekennzeichnet durch
einen vierten (150) Speicher zum Speichern der Adresse einer oder mehrerer Informations-gebender Einrichtungen (30),
wobei die programmierbare Steuereinrichtung (50) unter Verwendung einer vorbestimmten Adresse einen Verbindungsaufbau zur dazu gehörenden Informations-gebenden Einrichtung einleitet.

13. Mobile Vorrichtung nach einem der Ansprüche 2 bis 12, dadurch gekennzeichnet, daß die Schnittstelle zum Anschalten an einen digitalen Teilnehmeranschluß ausgebildet ist und die Vorrichtung (10) Informationen über den Steuerkanal des digitalen Festnetzes empfangen und aussenden kann.

14. Mobile Vorrichtung nach einem der Ansprüche 1 bis 13, dadurch gekennzeichnet, daß die Empfangseinrichtung (60) eine Einrichtung zum Decodieren, Demodulieren und/oder zum Entschlüsseln kryptographisch verschlüsselter Informationen aufweist.

15. Mobile Vorrichtung nach einem der Ansprüche 1 bis 14, gekennzeichnet durch
eine Einrichtung zum Authentifizieren der Vorrichtung gegenüber dem Festnetz (20) oder der Informations-gebenden Einrichtung (30) und umgekehrt.
